# EUROPEAN PATENT SPECIFICATION

(11) **EP 2 635 428 B1**
(45) Date of publication and mention of the grant of the patent: **02.10.2019**
(21) Application number: 11787970.0
(22) Date of filing: 04.11.2011
(51) Int. Cl.: B29C 35/02

(54) **THERMAL PROCESSING AND CONSOLIDATION SYSTEM AND METHOD**
THERMISCHES KONSOLIDIERUNGSSYSTEM UND VERFAHREN
SYSTÈME ET PROCÉDÉ DE TRAITEMENT ET DE CONSOLIDATION THERMIQUES

(30) Priority: 28.07.2011 US 201161574151 P; 10.06.2011 US 201161495661 P; 05.11.2010 US 410753 P
(43) Date of publication of application: 11.09.2013
(60) Divisional application: 19193413.2
(73) Proprietor: Lightweight Labs, LLC, Tacoma, Washington 98421 (US)
(72) Inventor: JACOBSEN, Ronald M., Puyallup Washington 98373 (US); PELC, Antonin, Milton Washington 98354 (US); BAMFORD, JR., Calvin D., Tacoma Washington 98403 (US); COOKE, Terrance William, Washington 98407 (US); CROSTON, Victor Wayne, Port Orchard Washington 98367 (US); WARRICK, Russell Carver, Seattle Washington 98155 (US)
(74) Representative: Liesegang, Eva
(86) International application number: PCT/US2011/059434
(87) International publication number: WO 2012/061768

(56) References cited:
- EP-A1- 2 239 789
- DE-A1- 10 048 974
- US-A- 4 808 362
- US-A- 5 362 221
- US-A1- 2008 203 622
- US-B1- 6 558 590
- SCHÖLDGEN R ET AL: "Mehr Verarbeitungsfreiheit für Composites", KUNSTOFFE INTERNATIONAL, CARL HANSER VERLAG, MUNCHEN, DE, vol. 100, no. 1, 1 January 2010 (2010-01-01), pages 26-28, XP001552124, ISSN: 0023-5563
- MIRACLE D B ET AL: "Curing", 1 January 2001 (2001-01-01), COMPOSITES, ASM HANDBOOK, USA, PAGE(S) 486 - 491, XP002563889, ISBN: 978-0-87170-703-1 page 486 - page 490; figure 3
- NIJZINK H: "AUTOMATISIERUNGSSTUFEN BEIM EINFUEHREN VON WERKZEUGWECHSELSYSTEMEN", KUNSTOFFE INTERNATIONAL, CARL HANSER VERLAG, MUNCHEN, DE, vol. 80, no. 5, 1 May 1990 (1990-05-01), pages 579-582, XP000165071, ISSN: 0023-5563
- "TEMPERIERMITTEL UND ELEKTRIK AUTOMATISCH KUPPELN", KUNSTOFFE INTERNATIONAL, CARL HANSER VERLAG, MUNCHEN, DE, vol. 80, no. 7, 1 July 1990 (1990-07-01), page 771, XP000159973, ISSN: 0023-5563

## Description

### TECHNICAL FIELD

The disclosure is related to a system to produce parts, such as composite parts, e.g., for the automobile, aerospace, sports and other industries utilizing composites. The system is capable of thermally processing and consolidating variable size, contoured, and flat parts while under pressure and optionally vacuum.

### BACKGROUND

Composite materials are used to fabricate fiber reinforced composite (FRC) components that have found uses as critical components within modern, high performance aircraft, and are becoming more common in terrestrial applications such as the automotive industry or sports industry. Composite materials are desirable for many of their inherent attributes including light weight, high strength, and stiffness. Particularly for aircraft application, those composite material components, which may be large and complex in shape, are often flight critical necessitating strict assurance of material and structural integrity. Unfortunately, these materials are sometimes difficult and costly to fabricate.

Typical composite material components comprise two or more layers of woven and/or unidirectional fiber filaments (e.g. carbon fibers, glass fibers, etc.) which are impregnated by a plastic resin (e.g. an epoxy resin), in a final thermally processed and consolidated state. Methods for forming such composite components include vacuum bag molding, pressure bag molding, autoclave molding, and resin transfer molding (RTM).

New automotive industry regulations, including the Corporate Average Fuel Economy (CAFE), Head Impact Characteristic (HIC), and Pedestrian Protection, represent a challenge to conventional materials used in automobiles, such as steel. Relative to steel, FRC components provide an excellent combination of physical properties including strength, weight, and energy absorption. As such, FRC components are able to meet these new requirements, such as requirements for mass reduction and energy absorption. However, to become cost effective replacement for steel, the amount of time and cost required to manufacture with FRC components must be reduced. In addition, manufacturing FRC components with aesthetically pleasing surfaces, such as Class A surfaces can be both time consuming and difficult. A class A surface is nothing more than a surfaces having curvature and tangency alignment to achieve an ideal aesthetical reflection quality. Class A composite surfaces can have additional class A requirements pertaining to short range waviness, long range waviness, voids, and other defects and surface features. People often interpret class A surfaces to have curvature continuity from one surface to another.

Composite parts are often fabricated in an autoclave that may utilize vacuum, heating, cooling, and pressure. Typical process chambers include autoclaves, ovens, and compression presses with matched metal molds, see for example the patent documents US 2008/0203622 A1 and DE 100 48 974 A1 or the ASM HANDBOOK COMPOSITES, section "Curing", 2001, USA, PAGE(S) 486 - 491, ISBN: 978-0-87170-703-1, MIRACLE D B ET AL. Parts can be laid up by hand or by automated means into the mold profile and optionally bagged for vacuum forming. The prepared mold is typically transferred from assembly area into the process chamber by cart; conveyors, or other manual or automatic means. After closing the process chamber, the laminate is heated, formed to the profile of the mold by vacuum and/or pressure, and thermally processed and consolidated. When the process is finished, the assembly is extracted from the mold. Existing systems and processes for producing high performance composites are considered low production capacity with long cycle times, typically in the one hour to eight hour range. The heating is accomplished by hot air or heated molds that are slow to heat and slow to cool.

### SUMMARY

The invention provides a method according to claim 1 and a system according to claim 15. Embodiments of the invention are defined in the dependent claims.

Embodiments are directed to apparatus and methods of operation that are further described in the following Brief Description of the Drawings, the Detailed Description, and the Claims. Other features will become apparent from the following detailed description made with reference to the accompanying drawings.

An embodiment for the present disclosure provides a method for thermally processing and consolidating unprocessed components with a thermal processing and consolidation system. This method involves positioning a first tool on a lower chamber assembly, the first tool positioned in alignment with an upper chamber assembly, the first tool in contact with and supporting a set of unprocessed components. The upper chamber assembly couples to the lower chamber assembly to form an enclosed plenum, the plenum operable to maintain a pressurized environment about the first tool. Services are provided to the first tool via an automatic coupling system where the services allow the unprocessed components within the tool to be thermally processed and consolidated according to a set of process parameters.

Another embodiment provides a thermal processing and consolidation system. This thermal processing and consolidation system includes an upper chamber assembly, a lower chamber assembly, a first layup and demolding station, a transfer assembly, an automatic coupling system, and a controller. The upper chamber assembly couples to the lower chamber assembly to form an enclosed plenum, the enclosed plenum operable to maintain a pressurized environment about a tool. The first layup and demolding station receives the tool and facilitates the layup, bagging and sealing of unprocessed components at the tool. A transfer assembly accurately positions the tool on the lower chamber assembly in alignment with the upper chamber assembly. This transfer physically moves the tool from the layup and demolding station to the lower chamber assembly in alignment with the upper chamber assembly. An automatic coupling system provides services to the tool and the enclosed plenum. A controller coupled to the upper chamber assembly lower chamber assembly layup and demolding station, transfer assembly and automatic coupling system directs services to be supplied to the enclosed plenum and tool in accordance with a set of process parameters. This set of process parameters allows an individual set of unprocessed components to be in contact with and supported by the tool to be thermally processed and consolidated.

### BRIEF DESCRIPTION OF THE DRAWINGS

For an understanding of embodiments of the disclosure, reference is now made to the following description taken in conjunction with the accompanying drawings in which like reference numerals indicate like features and wherein:
FIG. 1 is a side view of a thermal processing and consolidation system in accordance with an embodiment;
FIG. 2 is a cross section view of an automatic coupling system in accordance with an embodiment;
FIG. 3 is a partial cross-section view of a mold tool having preformed materials disposed on the mold tool in accordance with an embodiment;
FIG. 4 is a partial perspective view of the mold tool with a vacuum bag disposed on the mold tool in accordance with an embodiment;
FIG. 5 is a partial perspective view of the press and mold tool with the vacuum bag disposed over the preformed material and on the mold tool in accordance with an embodiment;
FIG. 6 is a view of a tool-connection system plate for the automatic coupling system that couples the mold tool with the thermal processing and consolidation system in accordance with an embodiment;
FIG. 7 is a partial perspective scaled engineering drawing of a feed mechanism to move the mold tool into the press for the press cycle to begin and to remove one or more mold tools from the press after the press cycle is complete in accordance with an embodiment;
FIG. 8 is a block diagram of a thermal processing and consolidation system in accordance with an embodiment; and
FIG. 9 is a logic flow diagram associated with a method of thermally processing and consolidating unprocessed components within a thermal processing and consolidation system in accordance with an embodiment.

### DETAILED DESCRIPTION

Some embodiments of the present invention will be now described with reference to the FIGs., like numerals being used to refer to like and corresponding parts of the various drawings.

Embodiments provide a system for forming composite components, such as carbon fiber reinforced plastics, glass fiber reinforced plastics, or fiber reinforced composite (FRC) components via thermal processing and consolidation. FRC components are useful in many industries, such as in the automotive, marine, military defense, aerospace, and medical equipment industries. Embodiments are especially useful for forming Class A FRC body panels across entire vehicle platforms. Examples of body panels and related parts include, but are not limited to, hoods, fenders, roofs, rockers, splitters, roof bows, dive planes, wings, mirror caps, deflectors, etc. Further examples of FRC components include, but are not limited to, deck-lids, battery applications, control arms, bumpers, sub-frames, and other structural components. Embodiments are not limited to forming any particular type of composite article, and such composite components can be of various sizes, shapes, and use. It is also to be appreciated that the embodiments are not limited to any particular industry.

An embodiment for the present disclosure provides a method for thermally processing and consolidating unprocessed components with a thermal processing and consolidation system. This method involves positioning a first tool on a lower chamber assembly, the first tool positioned in alignment with an upper chamber assembly, the first tool in contact with and supporting a set of unprocessed components. The upper chamber assembly couples to the lower chamber assembly to form an enclosed plenum, the plenum operable to maintain a pressurized environment about the first tool. The lower assembly may be a platen (i.e. flat surface) or a surface having some volume. Services are provided to the first tool via a service interface comprising an automatic coupling system. The services allow the unprocessed components within the tool to be thermally processed and consolidated according to a set of process parameters (i.e. a temperature and pressure profile).

Another embodiment provides a thermal processing and consolidation system. This thermal processing and consolidation system includes an upper chamber assembly, a lower chamber assembly, a first layup and demolding station, a transfer assembly, an automatic coupling system, and a controller. The upper chamber assembly couples to the lower chamber assembly to form an enclosed plenum, the enclosed plenum operable to maintain a pressurized environment about a tool. The first layup and demolding station receives the tool and facilitates the layup, bagging and sealing of unprocessed components at the tool. A transfer assembly accurately positions the tool on the lower chamber assembly in alignment with the upper chamber assembly. This transfer physically moves the tool from the layup and demolding station to the lower chamber assembly in alignment with the upper chamber assembly. An automatic coupling system provides services to the tool and the enclosed plenum. A controller coupled to the upper chamber assembly lower chamber assembly layup and demolding station, transfer assembly and automatic coupling system directs services to be supplied to the enclosed plenum and tool in accordance with a set of process parameters. This set of process parameters allows an individual set of unprocessed components to be in contact with and supported by the tool to be thermally processed and consolidated.

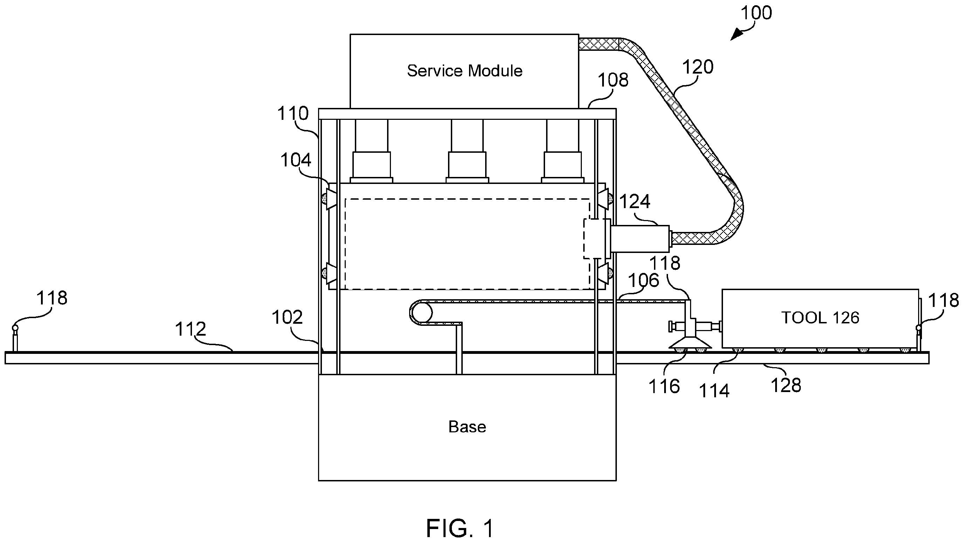

FIG. 1 is a side view of a thermal processing and consolidation system in accordance with an embodiment. This thermal processing and consolidation system 100 includes a lower chamber assembly 102, an upper chamber assembly 104, a conveyer assembly 106 and hydraulic press 108, upper chamber assembly guide 110, a tool guide 112, a an integrated roller system 114 mounted to the tool, a push pull assembly 116, a plurality of tool placement sensors 118, air hoses 120, thermal oil hoses 122 and an automatic coupling system 124. In operations, a tool 126 at a layup and demolding station 128 may be loaded with a set of unprocessed composite material components or a set of components to be thermally processed and consolidated and/or prepped within the thermal processing and consolidation system provided. After the components have been laid up within or on tool 126, the components can be bagged. Alternatively, a membrane type press may be used to seal when a bag system is not used within the thermal processing and consolidation system. Another embodiment can use a permanently attached bag and seal system integrated into the upper chamber assembly. The push pull assembly 116 coupled to the tool and via the conveyer assembly 106, repositions tool 126 from the layup and demolding stations to a point on to a location on lower chamber assembly 102 in alignment with upper chamber assembly 104. A hydraulic press 108 may be used to couple and maintain pressure between the upper chamber assembly 104 and lower chamber assembly 102. The lower chamber assembly and the upper chamber assembly join together to create the plenum. Various sensors 118 along the tool guide 112 reports the position of the tool 126 to a controller (not shown) that directs the operation of the thermal processing and consolidation system.

Once aligned, the upper chamber assembly is lowered by the hydraulic press 108 to form a pressure seal with lower chamber assembly 102. The tool 126 aligns and mates to automatic coupling system 124. Automatic coupling system 124 may provide a variety of services to the tool and an enclosed plenum formed by the upper chamber assembly 104 and lower chamber assembly 102. These services may include high pressure fluids or gases used to pressurize the environment of the plenum about tool 126. Vacuum can be used to withdraw air or other gases from the set of components to be thermally processed and consolidated at tool 126. Thermal oils in one embodiment may be used to heat via conduction and/or convection the components to be thermally processed and consolidated. Other embodiments may position radiators, infrared panels, resistive heating panels or other heating systems to provide heat to thermal processing and consolidation of the components within tool 126. As the tool may encompass 80% or more of the plenum, (with or without the use of spacers and partitions) the heat exchange systems provide a more efficient method of controlling the thermal profile of the components during processing than previously available when using a traditional autoclave. For example, in an autoclave the tools may take less than 20% of the chamber volume. This means that rapid changes in temperature in an autoclave are either very inefficient thermally, that the tool and material is heated unevenly due to the low thermal transfer rates of most autoclaves and the high thermal mass of most tooling, and as a result even heating and control of the autoclave, tooling and material is difficult to achieve. Runaway exothermic reactions in certain materials, due to limited thermal transfer capability of most autoclaves, is another drawback of most autoclave systems which can heat the autoclave air at relatively fast rates, but which do not have sufficient thermal energy transfer rates to draw sufficient exothermic heat out of the material. The thermal processing and consolidation system described herein has thermal transfer capabilities sufficient for controlling most exothermic reactions, which are typically a result of fast heating rates of reactive materials. The components at tool 126 are thermally processed and consolidated according to a pressure and temperature profile maintained as a set of process parameters and executed by the controller. After thermally processing and consolidating, the plenum is depressurized prior to opening. Also prior to opening, the automatic coupling system may be retracted from the tool. This automatic coupling system is a self-sealing system such that thermal oils, hydraulics or other fluids contained within the tools, do not leak within the plenum on the lower chamber assembly from either the tool side or the upper chamber assembly side of the automatic chamber coupling system. The upper chamber assembly is raised to a height to accommodate the insertion and withdrawal of tool 126.

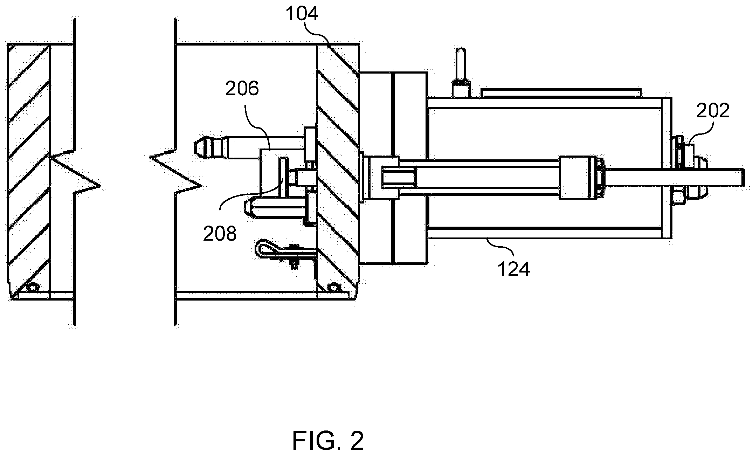

FIG. 2 is a more detailed cross section of the automatic coupling system 124 in accordance with an embodiment. FIG. 2 shows upper chamber assembly 104 with automatic coupling system 124 penetrating the upper chamber assembly 104. This coupling system will include an external connections 202 for the various services and internal self-sealing connections 206 that provide self-sealing and automatic coupling between tool 126 and the automatic coupling system 124. As previously described, the services provided to external connections 202 may include thermal fluids to heat and/or cool the tool and components according to the set of process parameters, vacuum to withdraw gases from the unprocessed components, gasses or fluids to pressurize the plenum according to the set of process parameters, a communication pathways to exchange information and/or control signals between the tool or plenum and the thermal processing and consolidation system, injection materials to be injected into the unprocessed components, and/or hydraulics to actuate mechanical systems within the automatic coupling system that allow the tool to be secured to the automatic coupling system. Withdrawing gasses serves not only to remove gasses, but also reduces voids that would result if the gasses were not removed. Withdrawing gasses through vacuum application consolidates the laminate by creating a differential pressure, causing the membrane/vacuum bag to compress the laminate at atmospheric pressure, or the differential pressure, if partial vacuum is utilized. The differential pressure created by the vacuum application underneath the membrane/vacuum bag allows positive atmospheric pressure (greater than one atmosphere and up to 500 psi or more) to be exerted onto the materials placed between the tool and the membrane/vacuum bag.

Hydraulics can be used to operate locking mechanisms that secures the tool to the automatic coupling system 124. The coupling system locking system can be hydraulic or electro-mechanical. Hydraulic push/pull system 208 allows for engaging/disengaging the tool with the chamber assembly. In other embodiments, push/pull system 208 may also serve as an engaging/disengaging mechanism that provides the locking mechanism. Communication pathways may provide an electronic or optical path for sensor information collected within the plenum or from the tool to be provided from the automatic coupling system to the controller. This may allow for the controller to monitor and control various stages of the process executed during the process, manipulate the flow of thermal oils, or the heat transfer between the tool and exterior sources. Further, identification encoded on the tool may be provided via a communication pathway to the controller to ensure that the proper set of process parameters is selected based on the components and the tool id. Although optional, identification encoded in the tool facilitates a seamless connection between the tools and associated stored process parameters, so that when using multiple unique tools in one system, the stored process parameters are automatically selected based on the tool in position to be processed.

In at least some embodiments, suitable preform tools are used to support, layup, bag and seal the unprocessed components. These tools may use fluids to heat and cool the tool, with the preform tool used to form the composite components.

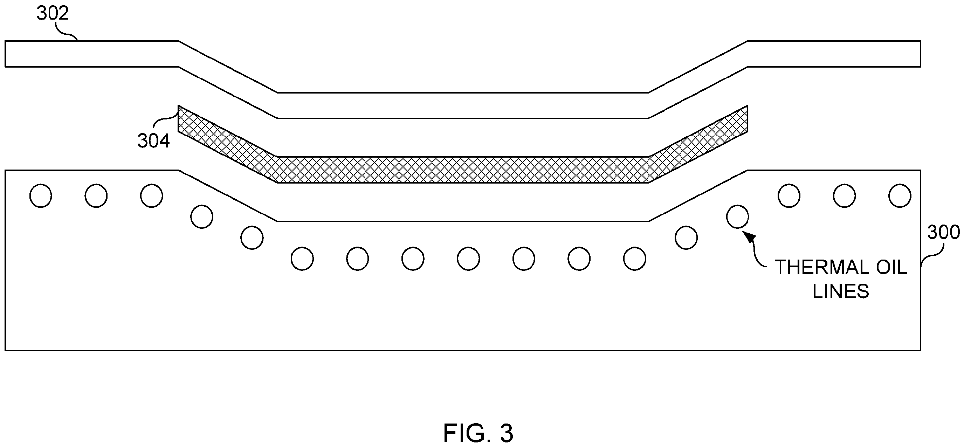

FIG. 3 is a view of a mold tool having preformed materials disposed on the mold tool in accordance with an embodiment. Mold tool 300 can interface with press 302. Press 302 may also be referred to as a pressure press, or bladder press, or diaphragm/membrane press. The mold tool 300 is useful for holding unprocessed components 304 thereon. Optionally, unprocessed components 304 are formed with the preform tool, and generally include a fiber mat and resin. This may include carbon fiber, glass fiber, preimpregnated fiber and plastic fiber mats; and resin film layers or injected resins. Components could also be manually or automatically formed directly in the tool. The mold tool 300 can be heated and/or cooled to interact with the resin of the unprocessed components 304.

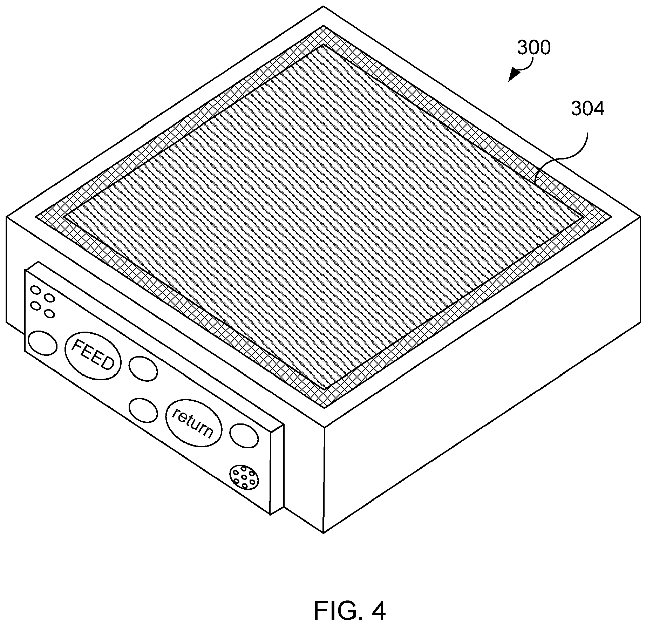

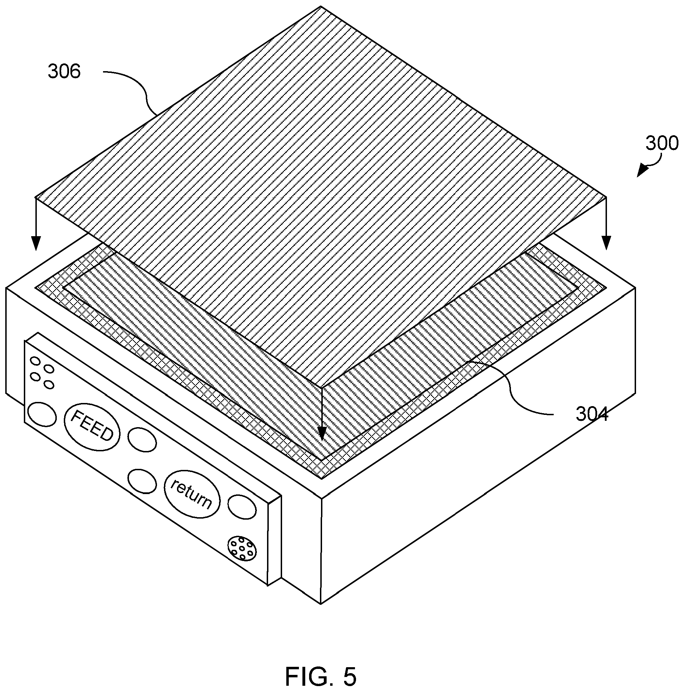

FIG. 4 is a partial perspective view of the mold tool. FIG. 5 is partial perspective view of the mold tool with the vacuum bag disposed over the preformed material and on the mold tool. Referring to FIGS. 4 and 5, vacuum bag 306 is shown disposed on the mold tool 300. The vacuum bag 306 is useful for forming the FRC component from the unprocessed components 304. The vacuum bag 306 can be of various configurations. The vacuum bag 306 is re-sealable with an integrated release for ease of use. The bag may include a stack of materials including seal tape, peel ply/release film (sometimes perforated), breather layer, and barrier film topped by a flexible membrane (silicone is common), or single use vacuum bag film. In one embodiment, the bagging system is a one-piece reusable bag that includes a preformed silicone membrane with a permanent release film coating on the material side of the bag, and an integrated breather/seal perimeter. The vacuum bag 306 can be evacuated and is useful for driving the resin into the fiber mat of the unprocessed components 304. In other embodiments, the resin may be injected into the unprocessed components layed up in the tool as one of the supplied services provided through automatic coupling system. In certain embodiments, the vacuum bag 306 provides for the elimination of components, such as a breather layer, release film, and/or tape. Other embodiments may incorporate vacuum bag in an interior surface of the upper chamber assembly or use a membrane incorporated with the upper chamber assembly for forming the FRC components.

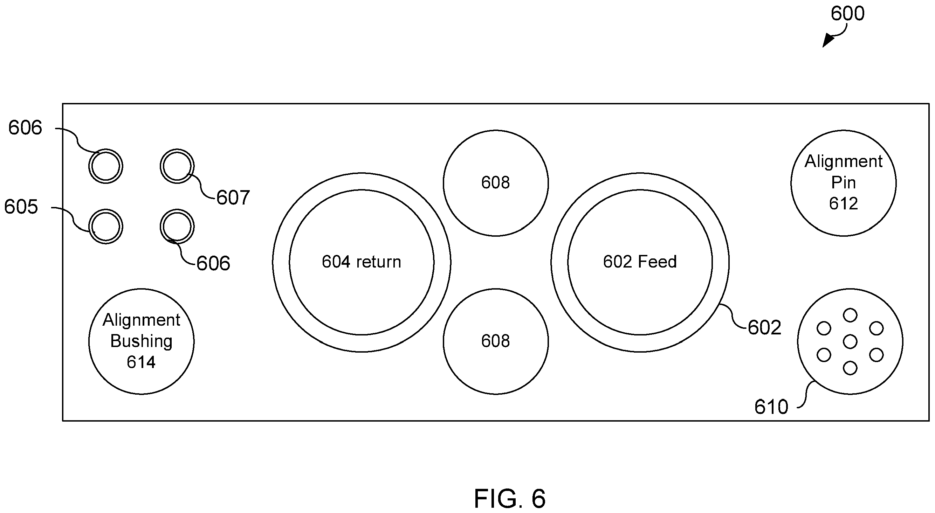

FIG. 6 is a view of a tool-connection system plate for the automatic coupling system that couples the mold tool with the thermal processing and consolidation system. The tool-connection system 600 includes exterior and interior connections 602 for feed and return of thermal fluid, exterior and interior connections 604 for a vacuum line, a static line 606 for pressure monitoring of the mold tool, exterior and interior connections 608 for pressurizing the enclosed plenum and a communication pathway connection 610 for the exchange of information such as but not limited to a resistive thermal device (RTD) for temperature monitoring and providing feedback of the mold tool. Temperature monitoring may also be implemented by thermocouples, optical pyrometers and other like systems. Embodiments may monitor the actual temperature or the rate of change in the temperature. The tool-connection system includes a plurality of connections for connecting various elements to the mold tool 300, such as fluid feeds, fluid returns, and sensors. In general, the elements provide services and communication with the mold tool 300. These elements are generally in communication with the mold tool 300, such as being in fluid communication with the mold tool 300.

In some embodiments the tool-connection system includes a resistive thermal device (RTD) male and female connector for temperature monitoring and feedback of the mold tool 300. In addition to or alternate to an RTD, other forms of temperature and pressure measurement of the mold tool 300 can also be utilized. These forms include thermocouples, optical pyrometers and other like systems. Embodiments may monitor the actual temperature or the rate of change in the temperature.

The internal connections of the self-coupling system include connections for feed and return of thermal fluid, connections for a vacuum and static line for pressure monitoring of the press, and a communication pathway connection (optical or electrical) to relay for temperature and pressure monitoring data and identification data to the controller. The internal connections 600 of the automatic coupling system also include a thermal fluid exhaust valve 602 for feeding thermal fluid to the tool, a thermal fluid intake valve 604 for returning the thermal fluid, a first alignment pin 612, a vacuum connector 605 and a static connector 606 for pressure monitoring of the plenum, a locking ring operated by hydraulic actuators supplied by connector 607, and a second alignment pin or bushing 614.

By pressurizing the plenum, pressure is applied to the mold tool 300 and unprocessed components during a press cycle to form the FRC component from the unprocessed components 304. The plenum and mold tool 300 have a pressure, temperature and or vacuum profile which is imparted by the internal connections 600 of the automatic coupling system. The thermal processing and consolidation system includes a lower frame for supporting the mold tool 300.

Operation of the thermal processing and consolidation system, including positioning of the tool and the temperature and pressure applied is monitored and controlled by a programmable logic controller (PLC). The PLC may be implemented using shared processing devices and/or individual processing devices. Processing devices may include microprocessors, micro-controllers, digital signal processors, microcomputers, central processing units, field programmable gate arrays, programmable logic devices, state machines, logic circuitry, analog circuitry, digital circuitry, and/or any device that manipulates signals (analog and/or digital) based on operational instructions. The memory may be a single memory device or a plurality of memory devices. Such a memory device may be a read-only memory, random access memory, volatile memory, non-volatile memory, static memory, dynamic memory, flash memory, and/or any device that stores digital information. Note that when the baseband processing module implements one or more of its functions via a state machine, analog circuitry, digital circuitry, and/or logic circuitry, the memory storing the corresponding operational instructions is embedded with the circuitry comprising the state machine, analog circuitry, digital circuitry, and/or logic circuitry.

Typically, connection between the mold tool 300 and the thermal processing and consolidation system is automated with a common connection design after the upper chamber assembly joins the lower chamber assembly. Specifically, the tool and the internal connections 600 of the automatic coupling system couple and engage with one another once the mold tool enters the plenum. Once coupled, the mold tool 300 and the thermal processing and consolidation system are in fluid (and, typically, electrical communication) with one another. Coupling of the elements is generally as follows (once the mold tool 300 and automatic coupling system are brought together): the vacuum connectors couple, the static connectors couple, the male locking pin and the female locking ring couple, the alignment bushings and the alignment pins couple, the RTD male connector and the RTD female connector couple, the thermal fluid intake valves couple, and the thermal fluid exhaust valves couple. The fluid containing connections are self-sealing to prevent the leakage of fluids to the plenum during this procedure. Such a configuration provides for manufacturing versatility, such as allowing for multiple tool variations (e.g. mold tool 300 variations) to be utilized with no affiliated change over time. For example, various configurations of mold tools 300 can be utilized and simply "plugged into" the thermal processing and consolidation system via the connection system. It is to be appreciated that the mold tool 300 can be of various sizes, shapes, and configurations.

The thermal processing and consolidation system can create a closed pressurized environment capable of being pressurized to various pressures in various amounts of time depending on the needs of the unprocessed components. For example, the thermal processing and consolidation system can create an enclosed plenum capable of being pressurized to about 150 psi in about 2 minutes. The plenum can also be pressurized to higher or lower than 150 psi, in various amounts of time greater or less than 2 minutes. The processing pressure being in the range of 80 to 150 psi, but could be more or less depending on material and desired part characteristics. The processing pressure in at least some embodiments can be significantly greater than 150 psi; for example one embodiment may use a pressure of about 300 psi. Similarly, the processing pressure in at least some embodiments can be significantly less than 80 psi. The pressure or pressure range selected depends upon the properties of the unprocessed components and resins, materials, or adhesives used in processing.

In at least some embodiments hydraulic actuator system within the upper chamber assembly of FIG. 1 provides selective pressure to some or the entire mold tool 300, and therefore presses the unprocessed components 304. A human machine interface (HMI) such as a graphical user interface (GUI) can be used to monitor and control process parameters associated with the process. The process parameters include pressure, vacuum, and/or temperature of the plenum and tool during the process cycle

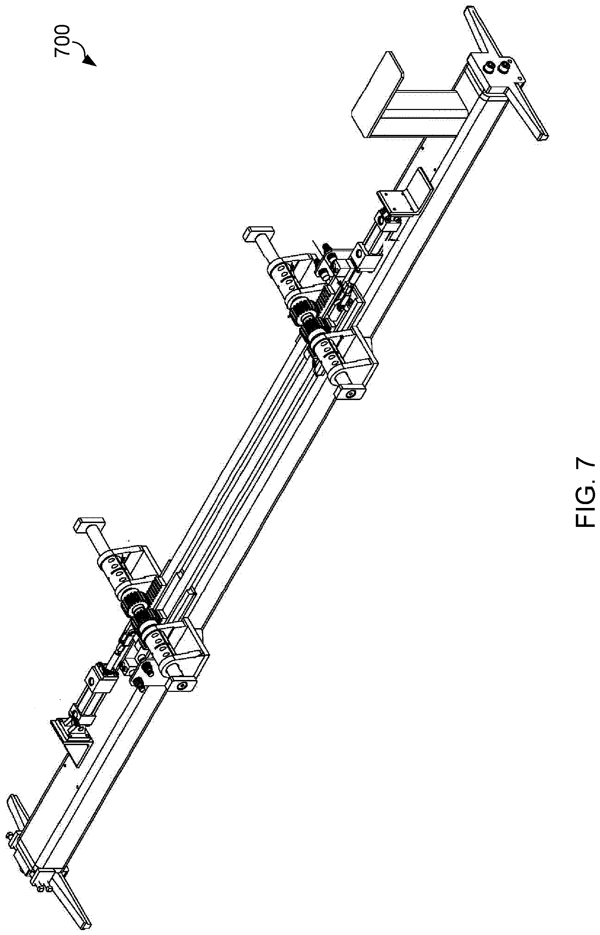

FIG. 7 is a partial perspective scaled engineering drawing of a feed mechanism to move the mold tool into the press for the press cycle to begin and to remove one or more mold tools from the press after the press cycle is complete in accordance with an embodiment. Feed mechanism 700 feeds the mold tool 300 into the thermal processing and consolidation system for the press cycle and removes the mold tool 300 from the thermal processing and consolidation system after the press cycle. The feed mechanism 700 can couple to a tray to hold, send and receive the mold tool 300. In at least one embodiment, the feed mechanism is a powered pusher/puller bar that couple to the tool or tray. In at least some embodiments, the tray may interface with the upper chamber assembly and lower chamber assembly to form the pressure boundary. The tray may also have internal lines and connections that allow the services to be provided to the tool through the shuttle table or tray. The tray may also be part of the lower chamber assembly.

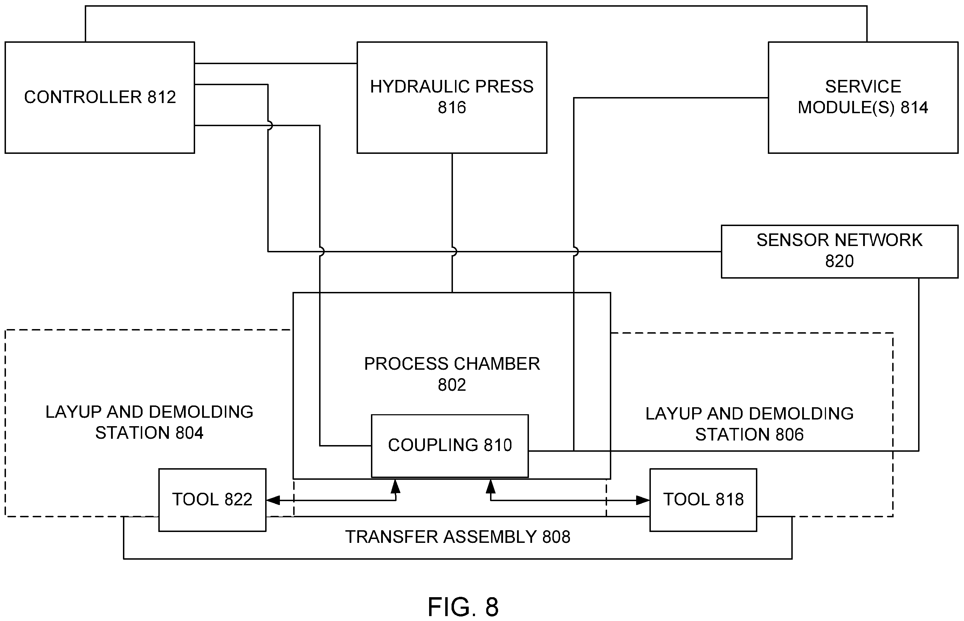

FIG. 8 provides a block diagram of a thermal processing and consolidation system 800 in accordance with an embodiment. Thermal processing and consolidation system 800 includes a process chamber 802, at least one layup and demolding station 804, optional additional lay-up and demolding station(s) 806, transfer assembly 808, coupling system 810, controller 812, and service modules 814. Process chamber 802 provides a pressurized enclosed plenum that may be formed from an upper chamber assembly joining a lower chamber assembly wherein the upper chamber assembly is coupled and uncoupled to the lower chamber assembly via a hydraulic press system 816. The layup and the molding station 804 receives a tool 818 wherein the tool may serve as a support for unprocessed components to be processed, i.e., thermally processed and consolidated within the process chamber. Layup may involve layup, bagging and sealing the unprocessed components to the tool 818 prior to transfer from the layup and demolding station 804 to the process chamber 802 via the transfer assembly 808.

Controller 812 couples to a sensor network 820, hydraulic press 816, process chamber 802, layup and demolding stations 804, optional layup and demolding stations 806, transfer assembly 808, coupling modules 810, and service modules 814. The transfer assembly directs movement of the tool from the layup and demolding station 804, to process chamber 802. The tool is positioned such that the tool can couple to coupling modules 810 in an automatic fashion. The controller 812 may then direct the process chamber to be closed and the services such as heating, cooling, pressurization, vacuum, and the exchange of information/data can be provided via the service module(s).

The controller 812 directs the service modules to execute a set of process parameters that cures the components laid-up within tool 818 according to a predetermined pressure, temperature, and/or vacuum profile.

In at least some embodiments, additional layup and demolding stations are provided that may receive additional tools 822. This allows an additional set of unprocessed components to be laid-up, bagged and sealed in tool 822 while a first set of unprocessed components are processed on tool 818. This allows throughput to be greatly enhanced by allowing the process chamber downtime to be minimized to only the time required to transfer a tool in and out of the process chamber.

Coupling system 810 may penetrate the process chamber walls, lower chamber assembly or a tray supporting tools and provide services to the interior of the process chamber and the tool as required by the set of process parameters. All these coupling systems may be self-sealing systems such that process fluids are not leaked within the process chamber or on the tool. These services again may include thermal fluids to exchange heat with the tool or other heat exchange structures located within the process chamber, vacuum to withdraw gases from the unprocessed components, gases to pressurize the enclosed plenum of the process chamber 802, communication pathways that allow sensors within the process chamber and tool to communicate process data back to controller 812. Further identification information associated with the tool 818 or tool 822 may be used by controller 812 to determine the set of process parameters to be executed in order to cure the unprocessed component. Injection materials such as resins may be injected into unprocessed components laid-up and bagged within the tool while the tool is already located within the process chamber. Hydraulics may also be used to secure the tool to the coupling system as directed by controller 812. To expedite processing, tools 818 and 822 may comprise a cradle that receives a slipper. This slipper can hold a set of unprocessed components. When the slipper is received at a layup and demolding station, the slipper may be placed as a unit on a cradle to facilitate the layup of the components within the tool. Numerous slipper tools can be used where the labor associated with the layup in the slipper tool is substantially longer than the thermal processing/consolidation cycle. The slipper tool approach allows for reduced cost when compared to creating numerous complete tools. The slipper may comprise the outer shell, which can be "laid-up" and vacuum bagged, prior to being placed into the heated cradle tool which transfers in and out of the chamber/plenum.

These components may be made from composite materials, utilizing reinforcing fibers such as but not limited to glass, carbon, ceramic, metallic or polymeric fibers; composite matrix materials such as but not limited to thermosetting polymers, thermosetting polymeric matrix composites, thermoplastic polymeric matrix composites, thermoplastic polymeric resins, thermosetting polymeric resins; fiber/metal interleaved laminates, fiber/low-density-core interleaved composites, low-density-cored composite laminates, metal matrix composites, low melting point metals, low melting point metal matrix composites; and metals with adhesives or polymeric adhesives.

The plenum of process chamber 802 may have a variable volume affected by the installation and removal of spacers or partitions in order to allow the volume of the plenum to substantially match the size of the tool being processed. Other types of heating and cooling may include the use of infrared radiation and/or microwave radiation.

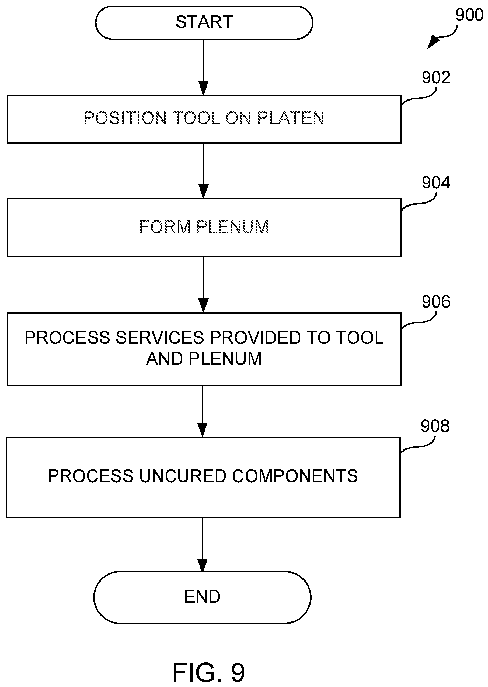

FIG. 9 is a logic flow diagram (e.g., performed by controller 812) associated with a method of thermally processing and consolidating unprocessed components within a thermal processing and consolidation system in accordance with an embodiment. Operations 900 begin in block 902 wherein a first tool is positioned on a lower chamber assembly. The first tool is positioned in alignment with an upper chamber assembly where this first tool supports a first set of unprocessed components. These components may be metal, composite materials, fiberglass, thermoset materials, thermoplastics or other like materials. In block 904 the upper chamber assembly and lower chamber assembly join or couple to form a plenum. This plenum may provide a pressurized environment about the tool and unprocessed components to be in contact with and supported therein. The pressurized environment may be controlled to have a specific pressure profile to support the processing of the unprocessed components within the upper chamber assembly. In block 906 services are provided to the tool in the plenum via a coupling system. The services may include the provision of injection materials, gases or fluids to pressurize the plenum, thermal oils or fluids used to exchange heat with the tool or heat exchange structures within the plenum, communication pathways to exchange information, data and/or electrical signals including power signals to the tool and other features within the plenum, and vacuum where vacuum may be applied to the unprocessed components in accordance with the set of process parameters.

In block 908 the unprocessed components are processed or thermally processed and consolidated within the plenum as directed by a set of process parameters. Further steps associated with the processing of unprocessed components are the engagement and disengagement of the tool as a plenum via a coupling system. As previously described the services are coupled or uncoupled as needed. The upper chamber assembly may be opened in such a manner to minimize the separation between the upper chamber assembly and the lower chamber assembly such that the opening is sufficient only for the transfer of tools to and from the alignment positions within the plenum. This positioning may be facilitated by a transfer assembly that couples to a layup and demolding station where the tool may be prepared for processing and the process component may be removed after processing. This transfer assembly may in at least some embodiments simultaneously withdraw one tool from the plenum while positioning an additional tool on the lower chamber assembly in alignment with the upper chamber assembly for further processing. This minimizes the time that the plenum need be opened.

In summary, embodiments provide a thermal processing and consolidation system. This thermal processing and consolidation system includes an upper chamber assembly, a lower chamber assembly, a first layup and demolding station, a transfer assembly, an automatic coupling system, and a controller. The upper chamber assembly couples to the lower chamber assembly to form an enclosed plenum, the enclosed plenum operable to maintain a pressurized environment about a tool. The first layup and demolding station receives the tool and facilitates the layup, bagging and sealing of unprocessed components at the tool. A transfer assembly accurately positions the tool on the lower chamber assembly in alignment with the upper chamber assembly. This transfer physically moves the tool from the layup and demolding station to the lower chamber assembly in alignment with the upper chamber assembly. An automatic coupling system provides services to the tool and the enclosed plenum. A controller coupled to the upper chamber assembly lower chamber assembly layup and demolding station, transfer assembly and automatic coupling system directs services to be supplied to the enclosed plenum and tool.

As one of average skill in the art will appreciate, the term "substantially" or "approximately", as may be used herein, provides an industry-accepted tolerance to its corresponding term. Such an industry-accepted tolerance ranges from less than one percent to twenty percent and corresponds to, but is not limited to, component values, integrated circuit process variations, temperature variations, rise and fall times, and/or thermal noise. As one of average skill in the art will further appreciate, the term "operably coupled", as may be used herein, includes direct coupling and indirect coupling via another component, element, circuit, or module where, for indirect coupling, the intervening component, element, circuit, or module does not modify the information of a signal but may adjust its current level, voltage level, and/or power level. As one of average skill in the art will also appreciate, inferred coupling (i.e., where one element is coupled to another element by inference) includes direct and indirect coupling between two elements in the same manner as "operably coupled".

## Claims

1. A method for thermally processing and consolidating unprocessed components within a thermal processing and consolidation system (100), comprising:
positioning a first tool (300; 818) on a lower assembly (102), the first tool (300; 818) positioned in alignment with an upper assembly (104), wherein the first tool (300; 818) contacts and supports a first set of unprocessed components (304);
coupling the upper assembly (104) and the lower assembly (102) to form a plenum, the plenum operable to maintain a pressurized environment about the first tool (300; 818);
providing services to the first tool (300; 818) and the plenum via a service interface, the service interface comprising an automatic coupling system (124);
thermally processing and consolidating the first set of unprocessed components (304) within the first tool (300; 818) wherein the services are supplied to the first tool (300; 818) as directed by a set of process parameters;
disengaging the services from the first tool (300; 818) and the plenum via the service interface;
uncoupling the upper assembly (104) from the lower assembly (102) to form a separation between the upper assembly (104) and the lower assembly (102); and
withdrawing the first tool (300; 818) via the separation, wherein a height between the upper assembly (104) and the lower assembly (102) is the same or greater than a height of the first tool (300; 818),
wherein the set of process parameters comprises a temperature, pressure and/or vacuum profile to be applied to the first set of unprocessed components (304).

2. The method of Claim 1, wherein the first tool (300; 818) substantially fills the plenum.

3. The method of Claim 1, wherein the first tool (300; 818) fills about 80% of the plenum.

4. The method of Claim 1, further comprising:
positioning at least one additional tool (822) on the lower assembly (102), the at least one additional tool (822) positioned in alignment with the upper assembly (104), while simultaneously withdrawing the first tool (300; 818) from the plenum, the at least one additional tool (822) contacts and supports at least one additional set of unprocessed components.

5. The method of Claim 1, wherein the services comprise at least one of:
thermal fluids to heat and/or cool the components according to the set of process parameters;
vacuum to withdraw gases from the first set of unprocessed components (304) in the first tool (300; 818);
gasses to pressurize the plenum according to the set of process parameters;
communication pathways to exchange information and/or control signals between the first tool (300; 818) and the thermal processing and consolidation system;
injection materials to be injected into the unprocessed components; or
locking actuators to lock the mechanical systems of the first tool (300; 818) to the coupling system.

6. The method of Claim 5, wherein the information comprises a tool identifier, the set of process parameters selected based on the tool identifier.

7. The method of Claim 1, further comprising:
collecting process data by at least one sensor embedded in the first tool (300; 818), material, and/or plenum.

8. The method of Claim 7, wherein the process data comprises temperature, pressure and/or material state data.

9. The method of Claim 1, wherein the automatic coupling system (124) is a self-sealing system.

10. The method of Claim 1, further comprising:
laying up, bagging and sealing the first set of unprocessed components (304) in the first tool (300; 818) at a first layup and demolding station of the thermal processing and consolidation system.

11. The method of Claim 1, further comprising:
laying up, bagging and sealing the first set of unprocessed components (304) in the first tool (300; 818) at a first layup and demolding station of the thermal processing and consolidation system; and
laying up, bagging and sealing at least one additional set of unprocessed components in at least one additional tool (822) at an at least one additional layup and demolding station of the thermal processing and consolidation system;
the laying up, bagging and sealing of the at least one additional set of unprocessed components occurs while the first tool (300; 818) is within the plenum.

12. The method of Claim 1, wherein the unprocessed components comprise at least one type of unprocessed components selected from the group consisting of:
composite materials, comprising: glass, carbon, ceramic, metallic and/or polymeric fibers; and composite matrix materials comprising thermosetting polymers, thermoplastic polymers; thermosetting polymeric matrix composites, thermoplastic polymeric matrix composites; thermoplastic polymeric resins, and or thermosetting polymeric resins;
fiber/metal interleaved laminates;
fiber/low-density-core interleaved composites;
low-density-cored composite laminates;
metal matrix composites;
low melting point metals;
low melting point metal matrix composites; and
metals
bonded with polymeric adhesives.

13. The method of Claim 1, further comprising:
reducing a volume of the plenum to substantially match a size of the first tool (300; 818).

14. The method of Claim 1, wherein a heating/cooling profile of the set of process parameters is supplied by at least one heat transfer method selected from the group consisting of:
conduction and/or convection from circulating fluids;
conduction and/or convection from electric heaters;
conduction and/or convection from radiators;
infrared heating; and
microwave heating.

15. A thermal processing and consolidation system (100), comprising:
an upper assembly (104);
a lower assembly (102), the upper assembly (104) operable to couple to the lower assembly (102) and form an enclosed plenum, the plenum operable to maintain a pressurized and/or temperature controlled environment;
a first layup and demolding station to receive a first tool (300; 818);
a transfer assembly operable to position the first tool (300; 818) on the lower assembly (102) in alignment with the upper assembly (104) from the first layup and demolding station;
**characterised by** an automatic coupling system (124) to provide services to the first tool (300; 818) and the plenum;
a service interface equipped with the automatic coupling system (124) to provide the services to the first tool (300; 818) and the plenum; and
a controller (812) coupled to the upper or lower assembly (102), the transfer assembly and the automatic coupling system (124), the controller (812) operable to direct the services to the first tool (300; 818) in accordance with a set of process parameters, the set of process parameters operable to cure a first set of unprocessed components (304) within the first tool (300; 818),
wherein the set of process parameters comprises a temperature, pressure and/or vacuum profile to be applied to the first set of unprocessed components (304),
wherein the controller (812) is operable to:
- disengage the services from the first tool (300; 818) and the plenum via the service interface,
- uncouple the upper assembly (104) from the lower assembly (102) to form a separation between the upper assembly (104) and the lower assembly (102); and
- withdraw the first tool (300; 818) via the separation, wherein the height between the upper assembly (104) and the lower assembly (102) is the same or greater than the height of the first tool (300; 818).

## Patentansprüche

1. Verfahren zum thermischen Verarbeiten und Verfestigen von unverarbeiteten Komponenten innerhalb eines thermischen Verarbeitungs- und Verfestigungssystems (100), umfassend:
Positionieren eines ersten Werkzeugs (300; 818) auf einer unteren Anordnung (102), wobei das erste Werkzeug (300; 818) in Ausrichtung mit einer oberen Anordnung (104) positioniert ist, wobei das erste Werkzeug (300; 818) einen ersten Satz von unverarbeiteten Komponenten (304) kontaktiert und trägt;
Koppeln der oberen Anordnung (104) und der unteren Anordnung (102), um eine Kammer zu bilden, wobei die Kammer bedienbar ist, um eine mit Druck beaufschlagte Umgebung um das erste Werkzeug (300; 818) aufrechtzuerhalten;
Bereitstellen von Diensten für das erste Werkzeug (300; 818) und die Kammer über eine Serviceschnittstelle, wobei die Serviceschnittstelle ein automatisches Koppelsystem (124) umfasst;
thermisches Verarbeiten und Verfestigen des ersten Satzes von unverarbeiteten Komponenten (304) innerhalb des ersten Werkzeugs (300; 818), wobei die Dienste dem ersten Werkzeug (300; 818) zugeführt werden, wie durch einen Satz von Prozessparametern vorgegeben;
Trennen der Dienste von dem ersten Werkzeug (300; 818) und der Kammer über die Serviceschnittstelle;
Entkoppeln der oberen Anordnung (104) von der unteren Anordnung (102), um eine Beabstandung zwischen der oberen Anordnung (104) und der unteren Anordnung (102) zu bilden; und
Entnehmen des ersten Werkzeugs (300; 818) über die Beabstandung, wobei eine Höhe zwischen der oberen Anordnung (104) und der unteren Anordnung (102) gleich oder größer als eine Höhe des ersten Werkzeugs (300; 818) ist,
wobei der Satz von Prozessparametern ein Temperatur-, Druck- und/oder Vakuumprofil umfasst, das auf den ersten Satz von unverarbeiteten Komponenten (304) anzuwenden ist.

2. Verfahren nach Anspruch 1, wobei das erste Werkzeug (300; 818) die Kammer im Wesentlichen ausfüllt.

3. Verfahren nach Anspruch 1, worin das erste Werkzeug (300; 818) etwa 80% der Kammer ausfüllt.

4. Verfahren nach Anspruch 1, ferner umfassend:
Positionieren mindestens eines zusätzlichen Werkzeugs (822) auf der unteren Anordnung (102), wobei das mindestens eine zusätzliche Werkzeug (822) in Ausrichtung mit der oberen Anordnung (104) positioniert wird, während gleichzeitig das erste Werkzeug (300; 818) aus der Kammer entnommen wird, wobei das mindestens eine zusätzliche Werkzeug (822) mindestens einen zusätzlichen Satz von unverarbeiteten Komponenten kontaktiert und trägt.

5. Verfahren nach Anspruch 1, wobei die Dienste mindestens eines von Folgenden umfassen:
Thermofluide zum Erwärmen und/oder Kühlen der Komponenten gemäß dem Satz von Prozessparametern;
Vakuum, um Gase aus dem ersten Satz von unverarbeiteten Komponenten (304) in dem ersten Werkzeug (300; 818) zu entnehmen;
Gase, um die Kammer gemäß dem Satz von Prozessparametern mit Druck zu beaufschlagen;
Kommunikationswege zum Austausch von Informations- und/oder Steuersignalen zwischen dem ersten Werkzeug (300; 818) und dem thermischen Verarbeitungs- und Verfestigungssystem;
Einspritzmaterialien zum Einspritzen in die unverarbeiteten Komponenten; oder
Verriegelungsaktoren zum Verriegeln der mechanischen Systeme des ersten Werkzeugs (300; 818) mit dem Koppelsystem.

6. Verfahren nach Anspruch 5, wobei die Information einen Werkzeugidentifikator umfasst, wobei der Satz von Prozessparametern auf der Basis des Werkzeugidentifikators ausgewählt wird.

7. Verfahren nach Anspruch 1, ferner umfassend:
Sammeln von Prozessdaten durch mindestens einen Sensor, der in das erste Werkzeug (300; 818), in das Material und/oder in die Kammer eingebaut ist.

8. Verfahren nach Anspruch 7, wobei die Prozessdaten Temperatur-, Druck- und/oder Materialzustandsdaten umfassen.

9. Verfahren nach Anspruch 1, wobei das automatische Koppelsystem (124) ein selbstverschließendes System ist.

10. Verfahren nach Anspruch 1, ferner umfassend:
Auflegen, Einpacken und Verschließen des ersten Satzes von unverarbeiteten Komponenten (304) in dem ersten Werkzeug (300; 818) an einer ersten Auflege- und Entformungsstation des thermischen Verarbeitungs- und Verfestigungssystems.

11. Verfahren nach Anspruch 1, ferner umfassend:
Auflegen, Einpacken und Verschließen des ersten Satzes von unverarbeiteten Komponenten (304) in dem ersten Werkzeug (300; 818) an einer ersten Auflege- und Entformungsstation des thermischen Verarbeitungs- und Verfestigungssystems; und
Auflegen, Einpacken und Verschließen mindestens eines zusätzlichen Satzes von unverarbeiteten Komponenten in mindestens einem zusätzlichen Werkzeug (822) an mindestens einer zusätzlichen Lege- und Entformungsstation des thermischen Verarbeitungs- und Verfestigungssystems,
wobei das Auflegen, Einpacken und Verschließen des mindestens einen zusätzlichen Satzes von unverarbeiteten Komponenten erfolgen, während sich das erste Werkzeug (300; 818) innerhalb der Kammer befindet.

12. Verfahren nach Anspruch 1, wobei die unverarbeiteten Komponenten mindestens einen Typ von unverarbeiteten Komponenten umfassen, der aus der Gruppe bestehend aus dem Folgenden ausgewählt ist:
Verbundmaterialien, umfassend: Glas-, Kohlenstoff-, Keramik-, Metall- und/oder Polymerfasern; und Verbundmatrixmaterialien umfassend wärmehärtende Polymere, thermoplastische Polymere; wärmehärtende Polymermatrix-Verbundmaterialien, thermoplastische Polymermatrix-Verbundmaterialien; thermoplastische Polymerharze und/oder wärmehärtende Polymerharze;
durchschossene Faser/Metall-Laminate;
durchschossene Faser/Niedrigdichte-Kern-Verbundwerkstoffe;
Verbundlaminate mit einem Kern niedriger Dichte;
Metallmatrix-Verbundwerkstoffe;
Metalle mit niedrigem Schmelzpunkt;
Metallmatrix-Verbundwerkstoffe mit niedrigem Schmelzpunkt; und
Metalle
verbunden mit polymeren Klebstoffen.

13. Verfahren nach Anspruch 1, ferner umfassend:
Verringern eines Volumens der Kammer, um im Wesentlichen eine Größe des ersten Werkzeugs (300; 818) zu erreichen.

14. Verfahren nach Anspruch 1, wobei ein Erwärmungs-/Kühlprofil des Satzes von Prozessparametern durch mindestens ein Wärmeübertragungsverfahren bereitgestellt wird, das aus der Gruppe bestehend aus dem Folgenden ausgewählt ist:
Leitung und/oder Konvektion durch zirkulierende Flüssigkeiten;
Leitung und/oder Konvektion durch Elektroheizungen;
Leitung und/oder Konvektion durch Heizstrahler;
Infrarot-Heizung; und
Mikrowellenheizung.

15. Thermisches Verarbeitungs- und Verfestigungssystem (100), umfassend:
eine obere Anordnung (104);
eine untere Anordnung (102), wobei die obere Anordnung (104) bedienbar ist, um mit der unteren Anordnung (102) zu koppeln und eine geschlossene Kammer zu bilden, wobei die Kammer bedienbar ist, um eine mit Druck beaufschlagte und/oder temperaturkontrollierte Umgebung aufrechtzuerhalten;
eine erste Lege- und Entformungsstation zur Aufnahme eines ersten Werkzeugs (300; 818);
eine Transferanordnung, die bedienbar ist, um das erste Werkzeug (300; 818) von der ersten Lege- und Entformungsstation aus auf die untere Anordnung (102) in Ausrichtung mit der oberen Anordnung (104) zu positionieren;
**gekennzeichnet durch**
ein automatisches Koppelsystem (124), um Dienste für das erste Werkzeug (300; 818) und die Kammer bereitzustellen;
eine Serviceschnittstelle, die mit dem automatischen Koppelsystem (124) ausgestattet ist, um die Dienste für das erste Werkzeug (300; 818) und die Kammer bereitzustellen; und
eine Steuereinheit (812), die mit der oberen Anordnung oder der unteren Anordnung (102), der Transferanordnung und dem automatischen Koppelsystem (124) gekoppelt ist, wobei die Steuereinheit (812) bedienbar ist, um die Dienste gemäß einem Satz von Prozessparametern an das erste Werkzeug (300; 818) zu leiten, wobei der Satz von Prozessparametern bedienbar ist, um einen ersten Satz von unverarbeiteten Komponenten (304) innerhalb des ersten Werkzeugs (300; 818) zu härten,
wobei der Satz von Prozessparametern ein Temperatur-, Druck- und/oder Vakuumprofil umfasst, das auf den ersten Satz von unverarbeiteten Komponenten (304) anzuwenden ist,
wobei die Steuereinheit (812) bedienbar ist, um Folgendes durchzuführen:
- Trennen der Dienste von dem ersten Werkzeug (300; 818) und der Kammer über die Serviceschnittstelle;
- Entkoppeln der oberen Anordnung (104) von der unteren Anordnung (102), um eine Beabstandung zwischen der oberen Anordnung (104) und der unteren Anordnung (102) zu bilden; und
- Entnehmen des ersten Werkzeugs (300; 818) über die Beabstandung, wobei die Höhe zwischen der oberen Anordnung (104) und der unteren Anordnung (102) gleich oder größer als die Höhe des ersten Werkzeugs (300; 818) ist.

## Revendications

1. Procédé de traitement et de consolidation thermique de composants non traités dans un système de traitement et de consolidation thermique (100), comprenant :
le positionnement d'un premier outil (300 ; 818) sur un ensemble inférieur (102), le premier outil (300 ; 818) étant positionné en alignement avec un ensemble supérieur (104), dans lequel le premier outil (300 ; 818) est en contact et supporte un premier ensemble de composants non traités (304) ;
l'accouplement de l'ensemble supérieur (104) et de l'ensemble inférieur (102) pour former un plénum, le plénum servant à maintenir un environnement sous pression autour du premier outil (300 ; 818) ;
la fourniture de services au premier outil (300 ; 818) et au plénum via une interface de service, l'interface de service comprenant un système d'accouplement automatique (124) ;
le traitement et la consolidation thermique du premier ensemble de composants non traités (304) dans le premier outil (300 ; 818) dans lequel les services sont fournis au premier outil (300 ; 818) selon les directives d'un ensemble de paramètres de traitement ;
le désengagement des services du premier outil (300 ; 818) et du plénum via l'interface de service ;
le désaccouplement de l'ensemble supérieur (104) de l'ensemble inférieur (102) pour former une séparation entre l'ensemble supérieur (104) et l'ensemble inférieur (102) ; et
le retrait du premier outil (300 ; 818) via la séparation, dans lequel une hauteur entre l'ensemble supérieur (104) et l'ensemble inférieur (102) est supérieure ou égale à une hauteur du premier outil (300 ; 818),
dans lequel l'ensemble de paramètres de traitement comprend un profil de température, de pression et/ou de vide à appliquer au premier ensemble de composants non traités (304).

2. Procédé selon la revendication 1, dans lequel le premier outil (300; 818) remplit sensiblement le plénum.

3. Procédé selon la revendication 1, dans lequel le premier outil (300; 818) remplit environ 80 % du plénum.

4. Procédé selon la revendication 1, comprenant en outre :
le positionnement d'au moins un outil supplémentaire (822) sur l'ensemble inférieur (102), l'au moins un outil supplémentaire (822) étant positionné en alignement avec l'ensemble supérieur (104), tout en retirant simultanément le premier outil (300 ; 818) du plénum, l'au moins un outil supplémentaire (822) est en contact avec et supporte au moins un ensemble supplémentaire de composants non traités.

5. Procédé selon la revendication 1, dans lequel les services comprennent au moins l'un parmi :
des fluides thermiques pour chauffer et/ou refroidir les composants en fonction de l'ensemble de paramètres de traitement ;
un vide pour retirer les gaz du premier ensemble de composants non traités (304) dans le premier outil (300 ; 818) ;
des gaz pour pressuriser le plénum en fonction de l'ensemble de paramètres de traitement ;
des voies de communication pour échanger des informations et/ou des signaux de commande entre le premier outil (300 ; 818) et le système de traitement et de consolidation thermique ;
des matériaux d'injection à injecter dans les composants non traités ; ou
des actionneurs de verrouillage pour verrouiller les systèmes mécaniques du premier outil (300 ; 818) sur le système d'accouplement.

6. Procédé selon la revendication 5, dans lequel les informations comprennent un identifiant d'outil, l'ensemble de paramètres de traitement étant choisi sur la base de l'identifiant d'outil.

7. Procédé selon la revendication 1, comprenant en outre :
la collecte de données de traitement par au moins un capteur intégré dans le premier outil (300 ; 818), le matériau et/ou le plénum.

8. Procédé selon la revendication 7, dans lequel les données de traitement comprennent des données d'état de température, de pression et/ou de matériau.

9. Procédé selon la revendication 1, dans lequel le système d'accouplement automatique (124) est un système auto-obturant.

10. Procédé selon la revendication 1, comprenant en outre :
la superposition, l'ensachage et le scellage du premier ensemble de composants non traités (304) dans le premier outil (300 ; 818) au niveau d'un premier poste de superposition et de démoulage du système de traitement et de consolidation thermique.

11. Procédé selon la revendication 1, comprenant en outre :
la superposition, l'ensachage et le scellage du premier ensemble de composants non traités (304) dans le premier outil (300 ; 818) au niveau d'un premier poste de superposition et de démoulage du système de traitement et de consolidation thermique ; et
la superposition, l'ensachage et le scellage d'au moins un ensemble supplémentaire de composants non traités dans au moins un outil supplémentaire (822) au niveau d'un au moins un poste de superposition et de démoulage supplémentaire du système de traitement et de consolidation thermique ;
la superposition, l'ensachage et le scellage de l'au moins un ensemble supplémentaire de composants non traités surviennent alors que le premier outil (300 ; 818) se trouve dans le plénum.

12. Procédé selon la revendication 1, dans lequel les composants non traités comprennent au moins un type de composants non traités choisi dans le groupe constitué de :
matériaux composites, comprenant : verre, carbone, céramique, fibres métalliques et/ou polymères ; et matériaux à matrice composite comprenant polymères thermodurcissables, polymères thermoplastiques ; composites à matrice polymère thermodurcissables, composites à matrice polymère thermoplastiques ; résines polymères thermoplastiques, et/ou résines polymères thermodurcissables ;
stratifiés intercalés fibre/métal ;
composites intercalés fibre/âme de faible densité ;
stratifiés composites à âme de faible densité ;
composites à matrice métallique ;
métaux à basse température de fusion ;
composites à matrice métallique à température de fusion basse ; et
métaux liés avec adhésifs polymères.

13. Procédé selon la revendication 1, comprenant en outre :
la réduction d'un volume du plénum pour qu'il s'adapte sensiblement à une taille du premier outil (300 ; 818).

14. Procédé selon la revendication 1, dans lequel un profil de chauffage/refroidissement de l'ensemble de paramètres de traitement est fourni par au moins un procédé de transfert de chaleur choisi dans le groupe constitué de :
conduction et/ou convection à partir de fluides de circulation ;
conduction et/ou convection à partir d'appareils de chauffage électriques ;
conduction et/ou convection à partir de radiateurs ;
chauffage infrarouge ; et
chauffage par micro-ondes.

15. Système de traitement et de consolidation thermique (100), comprenant :
un ensemble supérieur (104) ;
un ensemble inférieur (102), l'ensemble supérieur (104) servant à être accouplé à l'ensemble inférieur (102) et à former un plénum fermé, le plénum servant à maintenir un environnement sous pression et/ou régulé en température ;
un premier poste de superposition et de démoulage pour recevoir un premier outil (300 ; 818) ;
un ensemble de transfert servant à positionner le premier outil (300 ; 818) sur l'ensemble inférieur (102) en alignement avec l'ensemble supérieur (104) du premier poste de superposition et de démoulage ;
**caractérisé par**
un système d'accouplement automatique (124) pour fournir des services au premier outil (300 ; 818) et au plénum ;
une interface de service équipée du système d'accouplement automatique (124) pour fournir les services au premier outil (300 ; 818) et au plénum ; et
un dispositif de commande (812) accouplé à l'ensemble supérieur ou inférieur (102), l'ensemble de transfert et le système d'accouplement automatique (124), le dispositif de commande (812) servant à diriger les services vers le premier outil (300 ; 818) en fonction d'un ensemble de paramètres de traitement, l'ensemble de paramètres de traitement servant à durcir un premier ensemble de composants non traités (304) dans le premier outil (300 ; 818),
dans lequel l'ensemble de paramètres de traitement comprend un profil de température, de pression et/ou de vide à appliquer au premier ensemble de composants non traités (304),
dans lequel le dispositif de commande (812) sert à :
- désengager les services du premier outil (300 ; 818) et du plénum via l'interface de service,
- désaccoupler l'ensemble supérieur (104) de l'ensemble inférieur (102) pour former une séparation entre l'ensemble supérieur (104) et l'ensemble inférieur (102) ; et
- retirer le premier outil (300 ; 818) via la séparation, dans lequel la hauteur entre l'ensemble supérieur (104) et l'ensemble inférieur (102) est supérieure ou égale à la hauteur du premier outil (300 ; 818).
